# DEMANDE DE BREVET EUROPEEN

(11) **EP 4 414 334 A2**
(43) Date de publication de la demande: **14.08.2024**
(21) Numéro de dépôt: 24159877.0
(22) Date de dépôt: 02.04.2010
(51) Int. Cl.: C03C 17/00

(54) **PROCEDE DE FABRICATION D'UN RECIPIENT EN VERRE ET RECIPIENT CORRESPONDANT**

(30) Priorité: 03.04.2009 FR 0952201
(62) Demande divisionnaire de: 19183139.5
(71) Demandeur: Verescence France, 92800 Puteaux (FR)
(72) Inventeur: WAGNER, Christophe, 75015 PARIS (FR)
(74) Mandataire: Cabinet Didier Martin

(57) **Abrégé**

- Procédé de fabrication d'un récipient en verre et récipient correspondant.
- L'invention concerne un procédé de fabrication d'un récipient (1) contenant une substance cosmétique liquide ou pâteuse, ledit récipient (1) comprenant une paroi (2) en verre présentant une face interne (20), ledit procédé étant caractérisé en ce qu'il comprend une étape de recouvrement d'au moins une fraction de ladite face interne (20) par un matériau vitreux élaboré selon un procédé sol-gel, de façon que ledit matériau vitreux (8) recouvre ladite fraction de la face interne (20) selon une masse surfacique qui n'excède pas 70 g/m², ledit matériau vitreux (8) incluant des pigments dispersés en son sein, ladite étape de recouvrement comprenant une opération de dépose d'une couche d'un sol sur ladite fraction de la face interne (20), ledit sol étant formé par une solution liquide incluant un précurseur qui est le MTEOS.
- Récipients en verre.

## Description

### DOMAINE TECHNIQUE

La présente invention se rapporte au domaine général des corps creux pourvus d'une surface en verre utilisables dans différents secteurs industriels, et en particulier dans le secteur de l'emballage (récipients en verre, du genre flacons ou pots, destinés à contenir une substance liquide ou pâteuse, comme par exemple une substance cosmétique ou pharmaceutique). L'invention concerne également le domaine technique du traitement des récipients en verre, dans un but fonctionnel et/ou décoratif, notamment dans les secteurs cosmétique, pharmaceutique ou alimentaire.

L'invention concerne plus précisément un procédé de fabrication d'un récipient comprenant une paroi en verre délimitant une cavité d'accueil pour un produit destiné à être administré à un être humain ou à un animal.

L'invention concerne également un récipient comprenant une paroi en verre délimitant une cavité d'accueil pour un produit destiné à être administré à un être humain ou à un animal.

### TECHNIQUE ANTERIEURE

Il est connu de recourir à des récipients en verre pour contenir des produits liquides, en particulier dans les secteurs des industries cosmétique, pharmaceutique ou alimentaire. En particulier, l'utilisation de verre pour la réalisation de récipients à parfum liquide est particulièrement prisée, compte-tenu du caractère noble généralement prêté au verre par les consommateurs, et des qualités objectives de transparence, de robustesse, et de stabilité mécanique et chimique de ce matériau. C'est pourquoi, la totalité ou quasi-totalité des parfums corporels liquides, et en particulier des parfums considérés comme « *haut de gamme »,* sont contenus dans des flacons en verre. Les qualités esthétiques d'un flacon à parfum s'avèrent d'ailleurs extrêmement importantes pour l'attractivité commerciale globale d'un parfum. Dans cette optique, il s'avère donc essentiel de proposer un flacon de parfum dont l'esthétique est très nettement différente de celle des flacons de la concurrence, et présente un caractère particulièrement attractif et valorisant pour le parfum contenu dans le flacon.

Cette tâche est toutefois rendue difficile pour deux raisons principales.

La première de ces raisons tient au fait que le verre est, du fait de sa nature même, un matériau singulièrement difficile à travailler et à décorer dans des conditions économiques acceptables, ce qui est pourtant primordial dans des secteurs économiques « *grand public* » comme le secteur de la parfumerie.

La seconde raison est relative à l'environnement auquel est soumis le verre constituant les flacons de parfum et le contexte général d'utilisation de ces flacons. En particulier, l'intérieur d'un flacon de parfum est en contact direct avec le parfum lui-même, qui consiste habituellement en un liquide alcoolique. Cela signifie que toute décoration disposée sur la surface intérieure du flacon, afin d'être visible par transparence de l'extérieur par le consommateur, doit supporter d'être en permanence et à long terme baignée dans une telle solution alcoolique, sans se déliter, se désagréger, se décomposer ou se dissoudre, ce qui constitue un véritable défi technique.

Outre les effets catastrophiques en termes d'image de marque que pourrait engendrer une détérioration d'une décoration intérieure de flacon sous l'effet de son immersion prolongée dans le parfum liquide, une telle détérioration pourrait également entraîner des problèmes sanitaires dans la mesure où la composition du parfum s'en trouverait modifiée et contiendrait une phase plus ou moins dispersée de la matière ayant auparavant constitué le décor de la surface intérieure du flacon.

Ainsi, alors qu'il est extrêmement intéressant, au moins pour des raisons esthétiques, de décorer la surface intérieure d'un flacon en verre de façon qu'elle soit visible par transparence de l'extérieur, un tel décor intérieur s'avère extrêmement délicat à réaliser en pratique compte-tenu de l'agressivité du milieu alcoolique ambiant et de la difficulté à faire tenir un revêtement sur un substrat de verre.

### EXPOSE DE L'INVENTION

Les objets assignés à l'invention visent en conséquence à porter remède à la problématique exposée dans ce qui précède et à proposer un nouveau procédé de fabrication d'un récipient comprenant une paroi en verre, permettant d'obtenir un récipient qui, tout en étant particulièrement attractif du point de vue esthétique, présente une excellente résistance hydrolytique et est également particulièrement sûr pour l'utilisateur.

Un autre objet de l'invention vise à proposer un nouveau procédé de fabrication d'un récipient comprenant une paroi en verre, qui permet d'obtenir un récipient particulièrement esthétique et résistant à l'usage, tant du point de vue mécanique que du point de vue chimique, tout en étant parfaitement sûr du point de vue sanitaire.

Un autre objet de l'invention vise à proposer un nouveau procédé de fabrication d'un récipient comprenant une paroi en verre, qui est apte à être mis en oeuvre de façon industrielle.

Un autre objet de l'invention vise à proposer un nouveau procédé de fabrication d'un récipient comprenant une paroi en verre, qui permet de conférer des propriétés spécifiques audit récipient de façon particulièrement stable et sûre.

Un autre objet de l'invention vise à proposer un nouveau procédé de fabrication d'un récipient comprenant une paroi en verre, permettant d'obtenir un flacon qui présente un excellent aspect, sans défaut visible.

Un autre objet de l'invention vise à proposer un nouveau procédé de fabrication d'un récipient comprenant une paroi en verre, qui permet d'obtenir, de façon particulièrement rapide et bon marché, un récipient aux propriétés améliorées.

Un autre objet de l'invention vise à proposer un nouveau procédé de fabrication d'un récipient comprenant une paroi en verre, qui permet d'obtenir un récipient capable d'accueillir de manière stable et durable une substance fluide, et en particulier une substance fluide relativement agressive du point de vue chimique.

Un autre objet de l'invention vise à proposer un nouveau récipient comprenant une paroi en verre, qui tout en étant particulièrement attractif du point de vue esthétique, soit également particulièrement sûr à l'usage pour l'utilisateur.

Un autre objet de l'invention vise à proposer un nouveau récipient comprenant une paroi en verre, qui soit particulièrement esthétique et résistant à l'usage, tant du point de vue mécanique que du point de vue chimique, tout en étant parfaitement sûr du point de vue sanitaire.

Un autre objet de l'invention vise à proposer un nouveau récipient comprenant une paroi en verre, qui est apte à être produit de façon industrielle.

Les objets assignés à l'invention sont atteints à l'aide d'un procédé de fabrication d'un récipient comprenant une paroi en verre délimitant une cavité d'accueil pour un produit destiné à être administré à un être humain ou à un animal, ladite paroi en verre présentant une face interne située en regard de ladite cavité d'accueil, ledit procédé étant caractérisé en ce qu'il comprend une étape de recouvrement d'au moins une fraction de ladite face interne par un matériau vitreux élaboré selon un procédé sol-gel, de façon que ledit matériau vitreux recouvre ladite fraction de la face interne selon une masse surfacique qui n'excède sensiblement pas 70 g/m².

Les objets assignés à l'invention sont également atteints à l'aide d'un récipient comprenant une paroi en verre délimitant une cavité d'accueil pour un produit destiné à être administré à un être humain ou à un animal, ladite paroi en verre présentant une face interne située en regard de ladite cavité d'accueil, caractérisé en ce qu'au moins une fraction de ladite face interne est recouverte par un matériau vitreux élaboré selon un procédé sol-gel, ledit matériau vitreux recouvrant ladite fraction de la face interne selon une masse surfacique qui n'excède sensiblement pas 70 g/m².

### DESCRIPTIF SOMMAIRE DES DESSINS

D'autres objets et avantages de l'invention apparaîtront mieux à la lecture de la description qui suit, ainsi qu'à l'aide des dessins annexés, donnés à titre purement illustratif et non limitatif, dans lesquels :
- La figure 1 illustre, selon une vue schématique en perspective, un récipient conforme à l'invention, constitué en l'espèce par un flacon destiné à accueillir un parfum corporel liquide, ledit flacon étant fermé par un bouchon.
- La figure 2 illustre, selon une vue schématique en coupe, le flacon de la figure 1 ouvert.

### MEILLEURE MANIERE DE REALISER L'INVENTION

L'invention concerne un procédé de fabrication d'un récipient 1 comprenant une paroi 2 en verre délimitant une cavité 3 d'accueil pour un produit destiné à être administré à un être humain ou à un animal.

Le terme « *administré* » doit être compris ici dans un sens extensif, c'est-à-dire qu'il est susceptible de désigner une application du produit par toute voie et par tout moyen, ledit produit pouvant être par exemple appliqué sur la peau, une muqueuse ou des phanères (produit cosmétique, pharmaceutique, etc.), ou être ingéré (aliment, médicament, etc.). De façon préférentielle, le récipient 1 est conçu pour contenir une substance liquide ou pâteuse dans sa cavité 3, et par exemple un liquide alcoolique tel qu'un parfum corporel. Dans ce cas, le récipient 1 est avantageusement destiné à être fermé à l'aide d'un organe de fermeture 5, constitué par exemple par un bouchon 5A.

Dans la variante préférentielle illustrée aux figures, le récipient 1 est un flacon destiné à recevoir un parfum corporel. Dans ce mode de réalisation préféré, le procédé conforme à l'invention consiste donc en un procédé de fabrication d'un flacon destiné à contenir une substance cosmétique liquide ou pâteuse, et de préférence un liquide alcoolique parfumé constitué majoritairement d'éthanol, et de préférence comprenant au moins 90% d'éthanol. Il est cependant tout à fait envisageable que le procédé conforme à l'invention constitue un procédé de fabrication d'un flacon destiné à accueillir une substance autre que cosmétique, et par exemple une substance pharmaceutique, tel qu'un médicament. D'autres applications, autres que cosmétiques ou pharmaceutiques, sont bien entendu envisageables. Dans ce qui suit, pour des raisons de simplicité de description, seule la fabrication d'un flacon à parfum sera détaillée, à titre purement illustratif et non limitatif.

Le procédé conforme à l'invention comprend tout d'abord une étape de fourniture, ou de fabrication par tout moyen connu, d'un récipient 1 comprenant une paroi 2 en verre délimitant une cavité 3 d'accueil pour le produit destiné à être administré. Le terme « *verre* » doit être ici compris dans son acception classique, et désigne donc un verre minéral, et de préférence un verre de silice. De préférence, le verre constituant la paroi 2 est un verre blanc, transparent, et par exemple un verre sodo-calcique ou un verre boro-silicate. Avantageusement et pour des raisons qui seront précisées ci-après, le verre constituant la paroi 2 n'est pas un cristal, ni un verre au plomb, c'est-à-dire qu'il présente une teneur en plomb sensiblement nulle ou faible, par exemple inférieure à 20%, et de préférence inférieure à 10%.Avantageusement, le récipient 1 est constitué par une pièce d'un seul tenant intégralement réalisée en verre. Dans ce cas, la paroi 2 en verre est formée par un fond 2A en verre, une paroi latérale 2B en verre qui s'élève à partir et à la périphérie dudit fond 2A et un goulot 2C qui ferme le flacon tout en ménageant une ouverture 7 de remplissage/distribution permettant de mettre en communication la cavité 3 avec l'extérieur.

De préférence et comme évoqué précédemment, l'ouverture 7 coopère avec un organe de fermeture 5, constitué de préférence par un bouchon 5A, pour fermer le flacon. L'obtention d'un tel flacon en verre est parfaitement connue en tant que telle et peut être obtenue par tout procédé verrier classique.

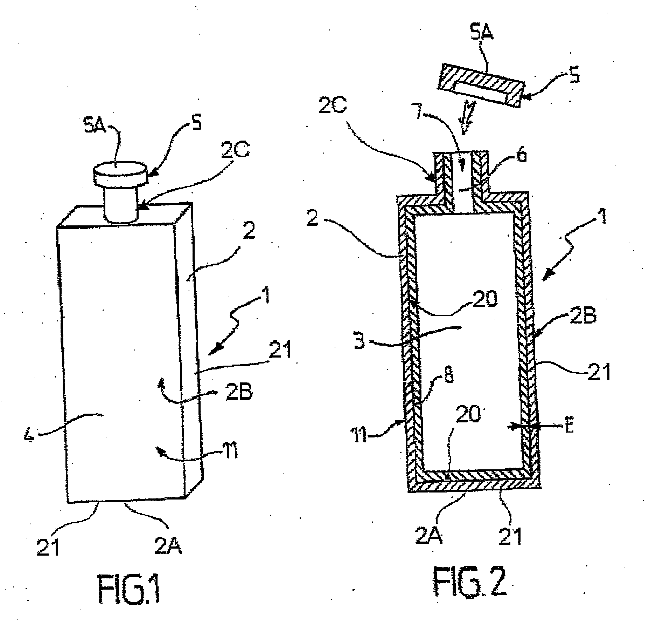

Tel que cela est illustré aux figures, la paroi 2 en verre présente une face interne 20, située en regard de la cavité 3 d'accueil, et une face externe 21 opposée. La paroi 2 en verre forme ainsi un corps creux évidé dont la face interne 20 délimite directement la cavité 3, laquelle forme un volume intérieur vide entièrement fermé, à l'exception de l'ouverture 7 vers l'extérieur dont la section est réduite par rapport à la section moyenne de la cavité 3, comme illustré à la figure 2. Une telle configuration est caractéristique d'un flacon pourvu d'un goulot, c'est-à-dire d'un col étroit permettant de mettre en communication l'intérieur du flacon avec l'extérieur.

Le procédé comprend en outre une étape de recouvrement d'au moins une fraction de ladite paroi 2 en verre, et plus précisément d'au moins une fraction de ladite face interne 20, par un matériau vitreux 8 élaboré selon un procédé sol-gel. Les procédés sol-gel sont bien connus en tant que tels. Ils permettent d'obtenir des matériaux vitreux, proches ou identiques au verre, et en particulier au verre de silice, sans recourir à une fusion, par simple polymérisation de précurseurs moléculaires.

Le recours à un procédé sol-gel pour revêtir la paroi 2 en verre d'un récipient conçu pour contenir un produit destiné à être administré à un être humain ou à un animal est particulièrement intéressant, notamment pour la triple raison suivante :
1) Il permet de résoudre les problèmes d'affinité avec le verre, qui rendent généralement extrêmement délicate toute tentative de déposer un revêtement à la surface d'une paroi en verre. En effet, les procédés sol-gel permettent d'obtenir des matériaux vitreux dont la nature est proche, voire identique, à celle de la paroi 2 en verre du récipient, de sorte qu'il existe alors une affinité forte et une compatibilité totale entre le matériau vitreux de recouvrement et le substrat formé par la paroi 2 en verre. Cette affinité permet une excellente tenue du matériau vitreux 8 de recouvrement, conduisant ainsi à l'obtention d'un récipient robuste à l'usage, dont le revêtement ne se désagrège pas à l'usage.
2) Un récipient est par nature creux, de sorte que sa paroi 2, en l'occurrence en verre, forme une surface gauche complexe difficile à recouvrir, particulièrement dans le cas d'un flacon pourvu d'un goulot restreignant l'accès à la cavité 3. La mise en oeuvre d'un procédé sol-gel permet de surmonter cet inconvénient, dans la mesure où elle est basée sur la mise en oeuvre de matériaux initialement en solution, ce qui facilite les opérations de recouvrement.
3) Enfin, le recours à un procédé sol-gel permet de bénéficier très simplement, dans un cadre industriel, d'un grand nombre d'effets décoratifs et/ou fonctionnels variés qui permettent de rendre le flacon particulièrement attractif tant du point de vue esthétique que du point de vue fonctionnel. A cette fin, la paroi 2 en verre est avantageusement translucide ou transparente, de façon que le matériau vitreux 8 soit visible de l'extérieur.

Comme évoqué précédemment, la fraction de la paroi 2 en verre recouverte par ledit matériau vitreux 8 lors de l'étape de recouvrement fait partie de la face interne 20 de la paroi 2. En d'autres termes, le matériau vitreux 8 recouvre, de préférence directement, au moins la surface intérieure du flacon, laquelle délimite directement la cavité 3.

L'étape de recouvrement est menée de façon que le matériau vitreux 8 recouvre ladite fraction de la face interne 20 selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m².

La mise en oeuvre d'un matériau vitreux 8 selon une telle masse surfacique permet d'obtenir un excellent effet de protection, et en particulier de protection hydrolytique, de la paroi 2 en verre, tout en permettant l'obtention d'effets esthétiques remarquables, grâce par exemple à l'inclusion de pigments dispersés dans le matériau vitreux 8. Le matériau vitreux 8 peut ainsi présenter une couleur opaque, transparente ou translucide. Les plages de masse surfacique indiquées ci-avant permettent en outre de limiter et même de sensiblement empêcher un éventuel phénomène de craquellement de la couche sol-gel formant le matériau 8.Avantageusement, le procédé comprend, préalablement à l'étape de recouvrement, une étape de préparation d'un sol sensiblement homogène et liquide par mélange d'au moins les substances suivantes :
- un précurseur pourvu de groupements alcoxy,
- un solvant alcoolique pour ledit précurseur,
- et de l'eau.

Le sol contient par exemple au moins un précurseur de matrice minérale, comme par exemple un précurseur du silicium (par exemple un alcoxyde de silicium), permettant d'obtenir un réseau minéral, comme par exemple un réseau de silice. Il est également envisageable que le sol contienne au moins un précurseur de matrice hybride (précurseur mixte organo-minéral), comme par exemple un organo-alcoxysilane, permettant d'obtenir un réseau organo-minéral, par exemple un réseau de silice auquel restent fixées des fonctions organiques. Il est également envisageable d'inclure des précurseurs de métal, comme par exemple un précurseur à l'aluminium. Différents précurseurs moléculaires peuvent être mélangés pour obtenir le sol, le choix des précurseurs étant effectué notamment en regard des propriétés attendues du matériau vitreux 8, de sa teneur en substances fonctionnelles (pigments, colorants, etc.) et de la nature desdites substances fonctionnelles. Ainsi, l'invention vise un matériau vitreux 8 comprenant notamment un réseau minéral et/ou un réseau organo-minéral (hybride) et/ou un réseau hybride mixte (incorporant un métal, tel que l'aluminium).

Avantageusement, lesdites substances mélangées pour obtenir ledit sol comprennent en outre une ou plusieurs substance(s) fonctionnelle(s) choisie(s) dans le groupe suivant : colorant, agent microbicide, médicament.

Par exemple, dans un mode de réalisation préféré, où l'on cherche à décorer un flacon en verre, le sol sera avantageusement formé par une solution liquide incluant :
- un précurseur pourvu de groupements alcoxy,
- un solvant alcoolique pour ledit précurseur,
- un colorant, constitué par exemple de pigments dispersés dans la solution,
- et de l'eau.

Par exemple, ledit colorant comprend des pigments minéraux, combiné par exemple avec des précurseurs de réseau minéral ou hybride ou hybride mixte, de façon à obtenir un réseau minéral ou hybride ou hybride mixte dans lequel sont englobés les pigments minéraux. Il est également envisageable de recourir à des pigments ou teintures organiques combinés avec des précurseurs de réseau hybride ou hybride mixte, de façon à obtenir un réseau hybride ou hybride mixte dans lequel sont englobés lesdits pigments ou teintures organiques.

Dans d'autres applications, en particulier des applications pharmaceutiques, le sol comprendra plutôt, au lieu d'un colorant, une substance active du genre agent microbicide permettant de préserver, voire d'améliorer, les qualités sanitaires du produit destiné à être contenu dans le flacon.

Avantageusement, le matériau vitreux 8 recouvrant la face interne 20 est poreux, c'est-à-dire qu'il ne procure sensiblement pas d'effet barrière anti-migration permettant d'empêcher la migration intempestive dans le contenu du récipient 1 de substances qui sont soit contenues dans la paroi en verre 2 soit présentes (par exemple sous forme d'une couche de coloration) entre cette dernière et la couche de matériau 8. Le caractère poreux du matériau 8 va toutefois de pair avec une absence de relargage des molécules constituant ledit matériau 8. Ainsi, il est avantageux de déposer (par un procédé sol-gel) directement sur le verre nu de la face interne 20 un matériau vitreux 8 qui, tout en étant poreux, incorpore une dispersion de pigments (minéraux ou organiques) capturés de manière stable et permanente dans le réseau moléculaire du matériau 8, lesdits pigments n'étant pas de ce fait susceptibles de migrer dans le contenu du récipient 1. Dans ce cas, il est préférable que le verre constituant la paroi 2 ne soit pas un verre au plomb, car le matériau vitreux 8, du fait de son caractère poreux, ne constituera pas une barrière empêchant la migration intempestive du plomb dans le contenu.

Avantageusement, le procédé conforme à l'invention comprend, préalablement à l'étape de recouvrement, une étape de rinçage de la paroi 2 en verre, effectuée par exemple à l'aide d'eau distillée, en vue d'obtenir une propreté suffisante de la paroi 2 en verre et permettre ainsi le bon déroulement ultérieur de l'étape de recouvrement.

Le procédé peut également comprendre, préalablement à l'étape de recouvrement, une étape d'activation de ladite fraction de la paroi 2 en verre, afin de faciliter l'adhérence du sol à ladite fraction de la paroi 2 en verre. Cette étape d'activation peut par exemple consister en une activation chimique à l'aide d'acide (type HCl) ou de base (type soude).

Avantageusement, l'étape de recouvrement est mise en oeuvre alors que la fraction de la paroi 2 en verre est portée à une température comprise entre sensiblement 18° et 200°C. De préférence, l'étape de recouvrement est mise en oeuvre alors que ladite fraction de la paroi 2 en verre est à température ambiante (environ 20°C), ce qui permet d'économiser de l'énergie. Toutefois, selon le procédé sol-gel mis en œuvre, il peut être intéressant de chauffer le récipient, et donc la paroi 2 en verre, pour améliorer les conditions de mise en oeuvre du sol-gel, et en particulier la tenue du sol sur la paroi 2 en verre.

Avantageusement, l'étape de recouvrement comprend une opération de dépose, de préférence sur le verre nu, d'une couche du sol sur ladite fraction de la paroi 2 en verre, alors que ledit sol se trouve à l'état sensiblement liquide. En d'autres termes la paroi 2, et plus précisément la face interne 20, est laquée avec le sol. Avantageusement, l'opération de dépose consiste à déposer la couche de sol directement sur la fraction de la face interne 20, c'est-à-dire sur le verre nu formant la face interne 20.

Cette dépose du sol à l'état liquide permet de recouvrir de façon particulièrement simple et homogène, compte-tenu de la fluidité du sol, la fraction (et de préférence sensiblement la totalité) de la paroi 2 en verre, même lorsque ladite paroi 2 présente une forme complexe et/ou est située à l'intérieur du récipient 1. Ainsi, le procédé est dans ce cas particulièrement adapté pour revêtir l'intérieur du récipient, c'est-à-dire la face interne 20 de la paroi 2 en verre, comme illustré à la figure 2. Bien entendu, l'invention n'est absolument pas limitée à un recouvrement de la face interne 20, il est tout à fait envisageable que la face externe 21 soit également revêtue, ou que seulement ladite face externe 21 soit revêtue.

Avantageusement, l'opération de dépose de la couche de sol est menée de façon à déposer ladite couche dudit sol sur ladite fraction de la face interne 20 selon une masse surfacique qui n'excède sensiblement pas 100 g/m². La mise en oeuvre d'une telle masse surfacique permet d'optimiser le comportement du sol lors des étapes ultérieures de gélification et de séchage qui seront décrites ci-après, et d'éviter notamment tout craquellement du revêtement. De préférence, l'opération de dépose est menée de façon à déposer ladite couche dudit sol selon une masse surfacique qui est de préférence comprise entre sensiblement 50 et 100 g/m², et de façon encore plus préférentielle entre sensiblement 70 et 90 g/m², ce qui permet d'obtenir une excellente stabilité lors de l'opération de séchage qui sera décrite ci-après. Dans un mode de réalisation particulièrement préféré, l'opération de dépose est menée de façon à déposer ladite couche dudit sol selon une masse surfacique d'environ 85 g/m². Une telle masse surfacique permet, en particulier lorsqu'elle est mise en oeuvre sur la face interne 20 d'un flacon de parfum intégralement en verre de contenance sensiblement égale à 130 ml, d'obtenir à l'issue du procédé un revêtement extrêmement homogène et exempt de défauts (craquelures).

Avantageusement, ladite opération de dépose du sol sur la fraction de la paroi 2 en verre comprend une vaporisation dudit sol sur ladite fraction de la face interne 20. En d'autres termes, le sol est dans ce cas pulvérisé sur la paroi 2 en verre, et plus précisément sur la face interne 20, sous la forme de fines gouttelettes (spray). Une telle vaporisation peut par exemple être effectuée à l'aide d'une buse de projection introduite dans la cavité d'accueil 3 du récipient 1 (par exemple par l'ouverture 7), un mouvement de rotation et de translation relatif du récipient 1 et de la buse étant mis en oeuvre pour que la solution de sol soit pulvérisée uniformément et de façon homogène sur toute la surface intérieure (face interne 20) du récipient 1 à traiter. Une mise en contact de la paroi 2 en verre avec le sol par vaporisation de ce dernier est particulièrement intéressante car elle permet un traitement industrialisé rapide, avec une quantité de sol bien inférieure à celle qui serait requise pour la mise en oeuvre de toute autre méthode de mise en contact. Il est cependant envisageable, à titre alternatif, que ladite opération de dépose mette en oeuvre non pas une vaporisation du sol mais un remplissage de la cavité 3 par le sol, la cavité 3 étant ensuite vidée de façon qu'il ne reste qu'une pellicule de sol sur la paroi 2 en verre. D'autres méthodes classiques de dépôt peuvent également être mises en oeuvre, la pulvérisation étant toutefois préférée pour les raisons évoquées plus haut.

Dans le cas préférentiel où l'opération de dépose comprend une vaporisation du sol, comme évoqué précédemment, la tenue du sol sur la paroi 2 en verre dépend principalement des paramètres suivants :
- température de la paroi 2 en verre, qui est par exemple comprise entre 18 et 200°C, et est de préférence à température ambiante,
- vitesse de rotation relative de la buse de vaporisation et du flacon,
- pression de vaporisation,
- orientation du jet produit par la buse,
- et débit de vaporisation de la buse.

En jouant sur ces paramètres, il est ainsi possible d'obtenir un dépôt de sol homogène, qui tient bien sur la paroi 2 en verre et qui est susceptible de conduire ultérieurement à un matériau vitreux 8 se présentant sous la forme d'une couche de revêtement robuste et exempte de défauts.

Avantageusement, le procédé conforme à l'invention comprend une étape de gélification du sol déposé sur ladite fraction de la paroi 2 en verre. Un telle étape de gélification est classique dans un procédé sol-gel. De préférence, cette gélification s'effectue par la mise en oeuvre des réactions suivantes :
- hydrolyse du précurseur (qui est de préférence pourvu de groupements alcoxy et comprend de préférence du silicium) en présence de l'eau que contient le sol, ce qui conduit à la formation de groupements silanol,
- et condensation desdits groupements silanol (polymérisation),
ladite étape de gélification conduisant à l'obtention d'une couche de gel recouvrant ladite fraction de la face interne 20 de la paroi 2 en verre.

Avantageusement, lesdites substances mélangées pour obtenir le sol comprennent en outre un catalyseur d'hydrolyse, et de préférence un catalyseur d'hydrolyse acide tel que l'acide acétique. La présence d'un tel catalyseur d'hydrolyse permet de faciliter et d'accélérer la réaction d'hydrolyse du précurseur, tout en permettant d'obtenir un plus grand nombre de réseaux linéaires qui s'entrecroisent pour la formation de la couche de gel à la surface de la fraction de la paroi 2 en verre.

Le recours à un catalyseur d'hydrolyse acide n'est bien entendu pas obligatoire, et il est par exemple tout à fait envisageable de recourir à un catalyseur d'hydrolyse basique.

Dans ce mode de réalisation préférentiel, l'étape de gélification du sol s'effectue donc spontanément, par réaction progressive des substances constituant ledit sol, et plus précisément par hydrolyse catalysée du précurseur. Le sol forme donc une substance instable qui évolue spontanément vers un gel. De manière préférentielle, la composition du sol sera choisie pour que ce dernier reste liquide pendant une durée suffisante pour permettre son application industrielle. Par exemple, le sol pourra avantageusement être conçu pour rester à l'état liquide pendant plusieurs heures une fois qu'il est élaboré.

Par exemple, le précurseur renfermé par le sol-gel peut être un métal ou un métalloïde avec des radicaux réactifs (typiquement un mélange d'alcoxysilanes) comme TEOS ou MTEOS. De préférence, le précurseur comprend au moins un composé organométallique, de préférence un alcoolate.

Avantageusement, le procédé comprend une étape de séchage de la couche de gel obtenue à l'issue de l'étape de gélification et qui recouvre ladite fraction de la paroi 2 en verre, par chauffage de ladite couche de gel dans des conditions permettant l'extraction de sensiblement la totalité du solvant (qui est de préférence un solvant alcoolique) hors du gel, ce dernier se transformant alors en ledit matériau vitreux 8, lequel est de préférence un verre de silice, ou du moins un verre à base de silice, c'est-à-dire un matériau vitreux ou pseudo-vitreux présentant des caractéristiques similaires ou sensiblement identiques à celle d'un verre obtenu par un procédé verrier classique de fusion.

Avantageusement, l'étape de séchage s'effectue dans un four pourvu d'un système de renouvellement d'atmosphère, par exemple une ventilation, permettant de renouveler en permanence l'air dans l'enceinte de cuisson et évacuer ainsi le solvant extrait hors du gel par chauffage.

La mise en oeuvre de cette opération d'extraction positive du solvant hors du gel est avantageuse, car elle permet d'éviter toute pollution du produit destiné à être contenu dans la cavité 3 par le solvant.

Avantageusement, l'étape de séchage comprend un cycle de chauffage du récipient 1 à une température comprise entre sensiblement 60 et 300°C. Le chauffage est mené de façon à éviter toute craquelure du matériau vitreux 8 issu du gel. A cette fin, il importe de régler le temps du séchage en fonction de la température de cuisson. Par exemple, la mise en oeuvre d'un séchage à 120°C ventilé pendant environ douze heures d'une couche de gel issue d'un sol déposé sur une masse surfacique d'environ 85 g/m² permet d'obtenir de bons résultats. Avantageusement, ledit matériau vitreux 8 recouvre, à l'issue de l'étape de séchage, ladite fraction de la paroi 2 en verre selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m².

La mise en oeuvre d'un matériau vitreux 8 selon une telle masse surfacique permet d'obtenir un excellent effet de protection, et en particulier de protection hydrolytique, de la paroi 2 en verre, tout en permettant l'obtention d'effets esthétiques remarquables, grâce par exemple à l'inclusion de pigments dispersés dans le matériau vitreux 8. Le matériau vitreux 8 peut ainsi présenter une couleur opaque, transparente ou translucide.

Avantageusement, l'étape de séchage permet également d'opérer une cuisson de la couche de gel, afin de durcir cette dernière et le matériau vitreux 8 qui en découle.

L'invention concerne également en tant que tel un récipient 1 susceptible d'être obtenu par le procédé conforme à l'invention décrit dans ce qui précède, et de préférence directement obtenu par le procédé en question. Comme expliqué précédemment, le récipient 1 comprend une paroi 2 en verre délimitant une cavité d'accueil 3 pour un produit destiné à être administré à un être humain ou à un animal.

Au moins une fraction de ladite paroi 2 en verre est recouverte par un matériau vitreux, de préférence un verre de silice, ou à base de silice, élaboré selon un procédé sol-gel.

De préférence, ladite paroi 2 en verre présente, comme exposé précédemment, une face interne 20, située en regard de la cavité d'accueil 3, et une face externe 21 opposée, ladite fraction de la paroi 2 en verre recouverte par ledit matériau 8 faisant partie de la face interne 20. En d'autres termes, le matériau vitreux 8 obtenu par le procédé sol-gel est déposé sur la paroi interne du récipient 1, ce qui permet d'améliorer la robustesse du récipient 1, et en particulier sa résistance hydrolytique, et de conférer des propriétés fonctionnelles et/ou esthétiques remarquables au récipient 1 . A cette fin et comme exposé dans ce qui précède, le matériau vitreux 8 incorpore avantageusement en son sein une ou plusieurs substance(s) fonctionnelle(s) choisie(s) dans le groupe suivant : colorant (de préférence pigments, minéraux ou organiques), agent microbicide, médicament.

Dans un mode de réalisation préféré, le récipient 1 constitue un flacon destiné à recevoir, en tant que produit à administrer, un liquide alcoolique, de préférence un parfum corporel. Dans le cas d'une telle application, le recours à un matériau vitreux, du type verre de silice, obtenu selon un procédé sol-gel, est particulièrement avantageux car il permet d'améliorer la résistance du flacon en verre contenant le parfum tout en conférant audit flacon un aspect visuel particulièrement attractif, par exemple par coloration de la face interne 20 grâce aux pigments, par exemple minéraux et/ou organiques, incorporés et dispersés dans le matériau vitreux 8, lequel peut présenter un aspect coloré opaque ou être transparent ou encore translucide. La paroi 2 en verre est elle-même de préférence translucide ou transparente, de façon que le matériau vitreux 8 soit visible de l'extérieur du récipient 1.

Avantageusement, le récipient est conçu pour que le matériau vitreux 8 soit en contact, de préférence direct, avec le produit à administrer.

Le recours à un procédé sol-gel permet un tel contact, qui évite d'avoir à revêtir le matériau vitreux 8 d'une couche de protection, dans la mesure où le procédé sol-gel permet d'obtenir un matériau inorganique amorphe, stable et non toxique qui peut donc être tout à fait mis en contact avec une substance susceptible d'être appliquée ou ingérée par un être vivant.

Comme évoqué précédemment, le matériau vitreux 8 se présente avantageusement sous la forme d'une couche recouvrant ladite fraction de la face interne 20 selon une masse surfacique qui n'excède sensiblement pas 70 g/m², et qui est de préférence comprise entre sensiblement 30 et 60 g/m², de façon encore plus préférentielle entre sensiblement 40 et 60 g/m², par exemple environ 50 g/m². La mise en oeuvre d'une telle masse surfacique permet un excellent compromis entre le prix de revient, l'augmentation de la résistance, en particulier hydrolytique du récipient 1 et l'amélioration de son aspect esthétique, en minimisant le risque d'apparition de craquelures de la couche sol-gel.

L'invention concerne par ailleurs, selon un aspect complémentaire susceptible de faire l'objet d'une protection indépendante, un procédé de fabrication d'un récipient 1 (de préférence un flacon pourvu d'un goulot) d'un seul tenant comprenant une paroi 2 en verre délimitant une cavité 3 d'accueil pour un produit destiné à être administré à un être humain ou à un animal, ladite paroi 2 en verre présentant une face interne 20 située en regard de ladite cavité 3 d'accueil, ledit procédé comprenant une étape de recouvrement d'au moins une fraction de ladite face interne 20 par un matériau vitreux élaboré selon un procédé sol-gel, ledit matériau vitreux 8 incluant de préférence des pigments de coloration, organiques ou minéraux.

Selon un autre aspect susceptible de faire l'objet d'une protection indépendante, l'invention concerne un procédé de fabrication d'un récipient 1 (de préférence un flacon pourvu d'un goulot) comprenant une paroi 2 en verre à teneur faible ou nulle en plomb (par exemple moins de 20%, de préférence moins de 10%) délimitant une cavité 3 d'accueil pour un produit destiné à être administré à un être humain ou à un animal, ladite paroi 2 en verre présentant une face interne 20 située en regard de ladite cavité 3 d'accueil, ledit procédé comprenant une étape de recouvrement d'au moins une fraction de ladite face interne 20 par un matériau vitreux élaboré selon un procédé sol-gel, ledit matériau vitreux 8 incluant de préférence des pigments de coloration, organiques ou minéraux et/ou présentant un caractère poreux.

Selon encore un autre aspect susceptible de faire l'objet d'une protection indépendante, l'invention concerne un procédé de fabrication d'un récipient 1 (de préférence un flacon pourvu d'un goulot) comprenant une paroi 2 en verre (de préférence à faible teneur en plomb) délimitant une cavité 3 d'accueil pour un produit destiné à être administré à un être humain ou à un animal, ladite paroi 2 en verre présentant une face interne 20 située en regard de ladite cavité 3 d'accueil et une face externe 21 opposée, ledit procédé comprenant une étape de recouvrement d'au moins une fraction de ladite face interne 20, et non de la face externe 21, par un matériau vitreux 8 élaboré selon un procédé sol-gel, ledit matériau vitreux 8 incluant de préférence des pigments de coloration, organiques ou minéraux et/ou présentant un caractère poreux et/ou recouvrant ladite fraction de la face interne (20) selon une masse surfacique qui n'excède sensiblement pas 70 g/m².

### POSSIBILITE D'APPLICATION INDUSTRIELLE

L'invention trouve son application industrielle dans la fabrication et l'ornementation de récipients, du genre flacons.

## Revendications

1. Procédé de fabrication d'un récipient (1) contenant une substance cosmétique liquide ou pâteuse, ledit récipient (1) comprenant une paroi (2) en verre délimitant une cavité (3) d'accueil pour ladite substance cosmétique, ladite paroi (2) en verre présentant une face interne (20) située en regard de ladite cavité (3) d'accueil, ledit procédé étant **caractérisé en ce qu'**il comprend une étape de recouvrement d'au moins une fraction de ladite face interne (20) par un matériau vitreux élaboré selon un procédé sol-gel, de façon que ledit matériau vitreux (8) recouvre ladite fraction de la face interne (20) selon une masse surfacique qui n'excède pas 70 g/m², ledit matériau vitreux (8) incluant des pigments dispersés en son sein, ladite étape de recouvrement comprenant une opération de dépose d'une couche d'un sol sur ladite fraction de la face interne (20), ledit sol étant formé par une solution liquide incluant un précurseur qui est le MTEOS, un solvant alcoolique pour ledit précurseur, un colorant constitué de pigments dispersés dans ladite solution, un catalyseur d'hydrolyse acide et de l'eau, ledit procédé comprenant, préalablement à ladite étape de recouvrement, une étape de fourniture ou de fabrication dudit récipient (1), ledit procédé étant **caractérisé en ce que** ledit récipient (1) contient ladite substance cosmétique liquide ou pâteuse dans la cavité (3).

2. Procédé selon la revendication précédente, **caractérisé en ce que** ledit matériau vitreux (8) est transparent ou translucide.

3. Procédé selon l'une quelconque des revendications précédentes, **caractérisé en ce que** ledit matériau vitreux (8) présente un aspect coloré opaque.

4. Procédé selon l'une quelconque des revendications précédentes, **caractérisé en ce que** ledit récipient (1) est fermé par un organe de fermeture (5) constitué par un bouchon (5A).

5. Procédé selon l'une quelconque des revendications précédentes, **caractérisé en ce qu'**il comprend une étape de chauffage du récipient (1) et donc de la paroi de verre (2), l'étape de recouvrement étant mise en oeuvre alors que la fraction de la paroi (2) en verre est portée à une température comprise entre sensiblement 18° et 200°C.

6. Procédé selon l'une quelconque des revendications précédentes, **caractérisé en ce que** l'opération de dépose est une opération de dépose de la couche de sol sur le verre nu, alors que ledit sol se trouve à l'état sensiblement liquide.

7. Procédé selon la revendication précédente, **caractérisé en ce que** ladite opération de dépose de la couche de sol alors que ledit sol est à l'état sensiblement liquide permet de recouvrir de façon homogène ladite fraction de ladite face interne (20).

8. Procédé selon l'une quelconque des revendications précédentes, **caractérisé en ce que** ledit matériau vitreux (8) recouvre ladite fraction de la face interne (20) selon une masse surfacique qui est comprise entre 30 et 60 g/m², de préférence entre 40 et 60 g/m².

9. Procédé selon l'une quelconque des revendications précédentes, **caractérisé en ce qu'**il comprend, préalablement à ladite étape de recouvrement, une étape de préparation dudit sol sensiblement homogène et liquide par mélange d'au moins les substances suivantes : ledit précurseur, ledit solvant alcoolique, ledit colorant, ledit catalyseur d'hydrolyse acide et l'eau.

10. Procédé selon l'une quelconque des revendications précédentes **caractérisé en ce que** ledit catalyseur d'hydrolyse acide est l'acide acétique.

11. Procédé selon l'une quelconque des revendications précédentes, **caractérisé en ce que** ladite opération de dépose comprend une pulvérisation dudit sol sur ladite fraction de la face interne (20).

12. Procédé selon la revendication précédente, **caractérisé en ce que** ladite pulvérisation est effectuée à l'aide d'une buse de projection introduite dans la cavité d'accueil (3) du récipient (1), un mouvement de rotation et de translation relatif du récipient (1) et de la buse étant mis en oeuvre.

13. Procédé selon la revendication précédente, **caractérisé en ce que** le mouvement de rotation et de translation relatif du récipient (1) et de la buse est mis en oeuvre pour que la solution de sol soit pulvérisée uniformément et de façon homogène sur toute la face interne (20).

14. Procédé selon l'une quelconque des revendications précédentes, **caractérisé en ce que** l'opération de dépose est menée de façon à déposer ladite couche dudit sol sur ladite fraction de la face interne (20) selon une masse surfacique qui n'excède pas 100 g/m², et qui est de préférence comprise entre 50 et 100 g/m², de façon encore plus préférentielle entre 70 et 90 g/m², par exemple environ 85 g/m².

15. Procédé selon l'une quelconque des revendications précédentes, **caractérisé en ce qu'**il comprend une étape de gélification du sol déposé sur ladite fraction de la face interne (20), ladite étape de gélification conduisant à l'obtention d'une couche de gel recouvrant ladite fraction de la face interne (20).

16. Procédé selon la revendication précédente, **caractérisé en ce que** ladite gélification s'effectue par la mise en oeuvre des réactions suivantes :
- hydrolyse du précurseur en présence de l'eau que contient le sol, ce qui conduit à la formation de groupements silanol,
- et condensation desdits groupements silanol.

17. Procédé selon la revendication 15 ou 16 **caractérisé en ce qu'**il comprend une étape de séchage de ladite couche de gel recouvrant ladite fraction de la face interne (20), par chauffage de ladite couche de gel dans des conditions permettant l'extraction de sensiblement la totalité dudit solvant hors du gel, ce dernier se transformant alors en ledit matériau vitreux (8).

18. Procédé selon la revendication précédente, **caractérisé en ce que** l'étape de séchage comprend un cycle de chauffage du récipient (1) à une température comprise entre sensiblement 60°C et 300°C.

19. Procédé selon la revendication 17 ou 18 **caractérisé en ce que** l'étape de séchage s'effectue dans un four pourvu d'un système de renouvellement d'atmosphère, par exemple une ventilation.

20. Procédé selon l'une quelconque des revendications précédentes, **caractérisé en ce qu'**il comprend, préalablement à ladite étape de recouvrement, une étape d'activation de ladite fraction de la face interne (20), afin de faciliter l'adhérence du sol à ladite fraction de la face interne (20).

21. Procédé selon l'une quelconque des revendications précédentes, **caractérisé en ce que** ladite substance cosmétique liquide ou pâteuse est un parfum corporel.

22. Procédé selon l'une quelconque des revendications précédentes **caractérisé en ce que** ledit récipient (1) est un flacon.
